# EUROPEAN PATENT SPECIFICATION

(11) **EP 1 472 832 B1**
(45) Date of publication and mention of the grant of the patent: **15.04.2015**
(21) Application number: 02792806.8
(22) Date of filing: 25.11.2002
(51) Int. Cl.: H04L 12/28

(54) **METHOD AND DEVICE FOR MANAGING A CONNECTION AND RESOURCE RESERVATION IN A COMMUNICATION NETWORK COMPRISING A BRIDGE**
VERFAHREN UND VORRICHTUNG ZUR VERBINDUNGSVERWALTUNG UND RESOURCEN-ZUWEISUNG IN KOMMUNIKATIONSNETZWERKEN, DIE EINE BRÜCKE BEINHALTEN
PROCEDE ET DISPOSITIF POUR GERER UNE CONNEXION DANS UN RESEAU DE COMMUNICATION COMPRENANT UN PONT

(30) Priority: 23.11.2001 EP 01403016
(43) Date of publication of application: 03.11.2004
(73) Proprietor: Thomson Licensing, 92130 Issy-les-Moulineaux (FR)
(72) Inventor: STRAUB, Gilles, F-35690 ACIGNE (FR); HENRY, Jean-Baptiste, F-35520 MELESSE (FR); PERROT, Sébastien, F-35000 RENNES (FR); THOMAS, Nathalie, F-35135 CHANTEPIE (FR)
(74) Representative: Le Dantec, Claude
(86) International application number: PCT/EP2002/013300
(87) International publication number: WO 2003/045010

(56) References cited:
- EP-A- 0 933 900
- EP-A- 1 113 625
- WO-A-01/38996
- WO-A-01/56226
- DAVID V. JAMES: "Isochronous Resource Management, Rev. 01" IEEE P1394.1 WORKING GROUP - BR062R01, [Online] 1 December 1999 (1999-12-01), pages 1-35, XP002195120 Retrieved from the Internet: <URL:http://grouper.ieee.org/groups/1394/1 /Documents/br062r01.pdf> [retrieved on 2002-04-04]
- ETSI: "Broadband Radio Access Networks (BRAN); HIPERLAN Type 2; Packet based convergence layer; Part 3: IEEE 1394 Service Specific Convergence Sublayer (SSCS)" ETSI TS 101 493-3 V1.1.1, September 2000 (2000-09), XP002190834 cited in the application
- ETSI: "Broadband Radio Access Networks (BRAN); HIPERLAN Type 2; Packet based Convergence Layer; Part 4: IEEE 1394 Bridge Specific Functions sub-layer for restricted topology" ETSI TS 101 493-4 V1.1.1, [Online] July 2001 (2001-07), XP002194674 Retrieved from the Internet: <URL:http://www.etsi.org> [retrieved on 2002-03-28] cited in the application

## Description

The invention concerns a method for managing connections over a link, which may be a wireless link, in a communication network, in particular a network comprising wired communication busses interconnected with the help of wireless links.

In a network comprising a plurality of interconnected transmission media, the bandwidth available over each transmission medium may not necessarily be the same.

If one considers for example two IEEE 1394 wired serial busses connected together using a 5 GHz ETSI BRAN HiperLAN 2 wireless link, the bandwidth available on each of the wired busses can be of 100 Mb/s or more, while the bandwidth available over the wireless link may be limited to 30 Mb/s. Consequently, the wireless link constitutes a bottleneck for connections using this link.

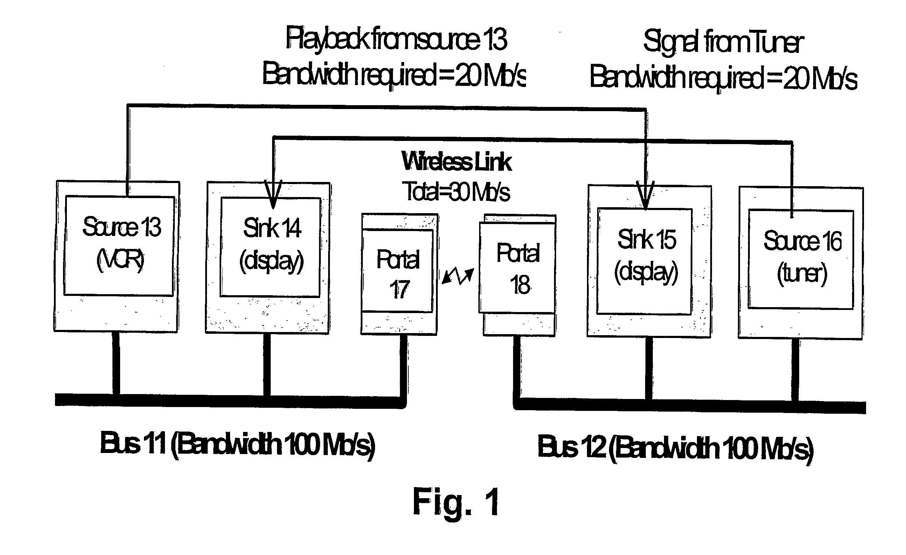

Figure 1 is a diagram of one example of such a network. The network comprises two busses 11 and 12, connected to source device 13 and sink device 14, respectively to sink device 15 and source device 16. Source device 13 is for example a digital VCR, while sink devices 14 and 15 are displays and source device 16 is a tuner. Bus 11 is also connected to a portal 17, while bus 12 is connected to a portal 18, both portals forming a wireless link between busses 11 and 12. It is supposed that the wireless link is transparent to devices 13 to 16 at the level of IEEE 1394, i.e. these devices have the impression that they are on the same physical bus.

Supposing the available bandwidth on the wireless link is of 30 Mb/s, a first connection of 20 Mb/s is established between the VCR 13 and the display 15. A second connection between tuner 16 and display 14 can be established, since the link is transparent to devices 16 and 14, but if the bandwidth required for this second connection is greater than the remaining wireless bandwidth, the display 14 will not display proper pictures, if any at all. As far as the application having built the second connection is concerned, the connection was nevertheless established without incident at the IEEE 1394 level, because of the transparency of the link at that level, but in reality not all data or no data at all passes the link.

Related to the present invention is the following ETSI standard: "Broadband Radio Access Networks (BRAN); HIPERLAN Type 2; Packet based convergence layer; Part 3: IEEE 1394 Service Specific Convergence Sublayer (SSCS)", ETSI TS 101 493-3 V1.1.1, September 2000 (2000-09), XP002190834.

The European patent application EP 01113121.6, filed on May 29, 2001 in the name of Thomson Licensing SA and having the title 'METHOD FOR MANAGING BANDWIDTH OVER A WIRELESS LINK IN A COMMUNICATION NETWORK' also concerns this problem.

The invention is defined by independent claims 1 and 10.

According to an embodiment of the invention, the portal is a node of the cluster to which the device establishing the connection is connected, or a central controller of the bridge.

According to an embodiment of the invention, the address comprises an offset in the address space of the node hosting the application.

According to an embodiment of the invention, the bridge is a wireless bridge comprising an isochronous resource manager, further comprising the step of, further to receiving the resource reservation request, having the portal forward the request to the isochronous resource manager, await its response and transmit the response back to the application.

According to an embodiment of the invention, the method further comprises the step, at the level of the portal, if the reservation is successfully made with the isochronous resource manager, of transmitting parameters of the reservation to all portals involved in the connection.

According to an embodiment of the invention, the step of transmitting parameters to the portals is carried out before the step of forwarding the response of the isochronous resource manager to the application.

According to an embodiment of the invention, a reservation request by the application has a format similar to a reservation request addressable to the isochronous resource manager of the bridge, said reservation request by the application comprising identifiers of the source and sink nodes for the connection, said portal further carrying out the step of replacing the source and sink node identifiers of the reservation request of the application by the identifiers of portals connecting the source and sink nodes to the bridge, and of carrying out the reverse change in the response of the isochronous resource manager.

According to an embodiment of the invention, the method further comprises the step, at the level of the application, of receiving from the bridge topological information for determining which portals of the bridge are involved in a connection.

According to an embodiment of the invention, a reservation request by the application further comprises identifiers of the portals connecting the source and sink nodes of the connection to the bridge.

Other characteristics and advantages of the invention will appear during the description of a non-restrictive embodiment explained with the help of the attached drawings among which:
- figure 1, already described, is a diagram of a network comprising a wireless link and illustrating the bandwidth bottleneck constituted by this link;
- figure 2 is a diagram of a network comprising a link between three sub-networks, and implementing the method according to the embodiment;
- figure 3 is a diagram of an address offset register in a HL2 node unit directory;
- figure 4 is a diagram of a different representation of the network of figure 2, explaining the role of the different nodes involved in a connection;
- figure 5 is a diagram of a generic message format for the messages defined in the present embodiment;
- figure 6 is a diagram of the message format for the 'ALLOCATE_SOME' command;
- figure 7 is a diagram of the message format for the following commands: 'MODIFY_BANDWIDTH'. 'RECLAIM_THIS'.
- figure 8 is a diagram of the message format for the 'RELEASE_THIS' command;
- figure 9 is a diagram of a data quadlet write request format for event notification;
- figure 10 is a diagram of the links in a network subsequent to a node connection change to avoid bottlenecks through the link.

Although the embodiment is based on the use of an ETSI BRAN Hiperlan 2 wireless link connecting IEEE 1394 busses, other technologies may be used, be it for the link or the sub-networks. An example of another technology for the link is the Internet Protocol ('IP'). Moreover, the links between wired busses need not necessarily be wireless, although this is the case in the embodiment described below.

The reader may find more information concerning IEEE 1394 busses in the standardization documents edited by the Institute of Electrical and Electronic Engineers (IEEE), in particular in Document A: IEEE1394-1995 and Document B: IEEE1394a-2000. Hiperlan 2 is a Broadband Radio Access Network (BRAN) defined by the European Telecommunications Standards Institute (ETSI).

Information concerning the connection of IEEE 1394 networks using Hiperlan 2 can be found in particular in the document C: ETSI TS 101 493-3 V1.2.1B (2001-010) - Technical Specification - Broadband Radio Access Networks (BRAN) - HIPERLAN Type 2 - Packet based convergence layer - Part 3: IEEE 1394 Service Specific Convergence Sublayer (SSCS), and in the document D: ETSI TS 101 493-4 V1.1.1 (2001-07) - Technical Specification - Broadband Radio Access Networks (BRAN) - HIPERLAN Type 2 - Packet based convergence layer - Part 4: IEEE 1394 Bridge Specific Functions Sublayer.

A last document for background information is document E: IEC 61883 'Digital Interface for Consumer Audio/Video Equipment', published by the International Electrotechnical Commission. The first part in particular describes the establishment of connections between input and output plugs of listener and talker devices.

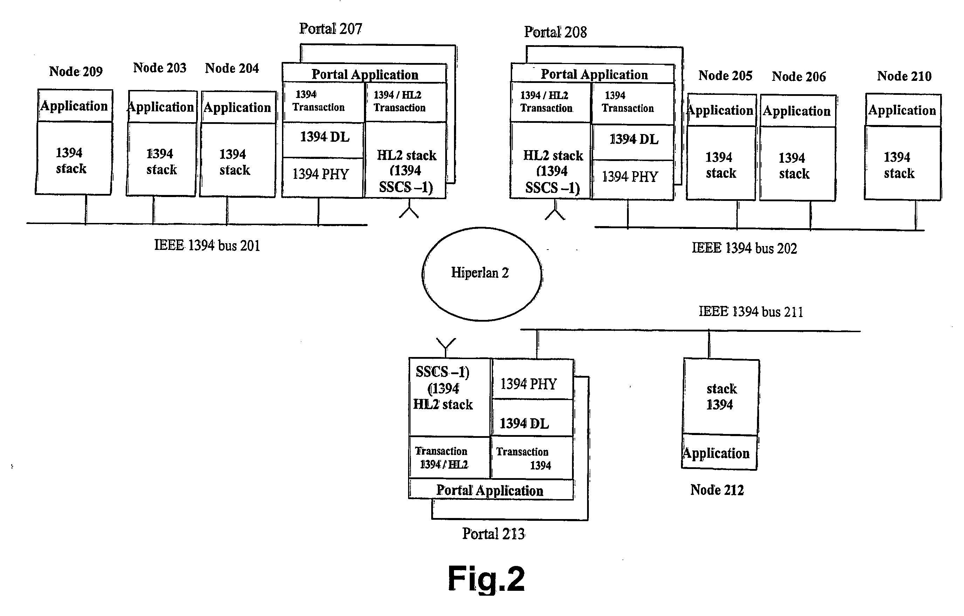

Figure 2 represents a network formed of three IEEE 1394 busses (also called device clusters or sub-networks) 201, 202 and 211 each comprising a wired IEEE 1394 bus, a plurality of devices (respectively nodes 203, 204, 209 and 205, 206, 210 and 212) and a Hiperlan 2 (HL2) node or 'portal' (for each bus, respectively 207, 208 and 213) to the wireless Hiperlan 2 link. The nodes are IEEE 1394 devices. For the purpose of the present description, at least the application of node 209 is aware of the existence and nature of the wireless link.

According to the present embodiment, the HL2 nodes 207, 208 and 213 are not transparent to the other devices, in the sense that they are also considered to be nodes on their respective busses, i.e. they are attributed a physical identifier after a bus reset. At the level of the IEEE 1394 layers however, the link is transparent: all nodes are considered to be on a single bus and physical identifiers are attributed accordingly after a reset. HL2 nodes 207 and 208 issue self identification packets to represent nodes on their respective clusters when bus resets are carried out.

Each node comprises an IEEE 1394 software stack, i.e. the physical layer, the link layer and the transaction layer, as well as an application layer. Each HL2 node also comprises these layers on their wired bus interface. Lastly, the HL2 nodes communicate using the Hiperlan 2 protocol stack.

A Hiperlan 2 network comprises a node acting as Central Controller, and with which wireless nodes register. The Central Controller is also in charge of allocating resources in the Hiperlan 2 wireless frame. Document C defines an Isochronous Resource Manager ('IRM'), located in the IEEE 1394 Service Specific Convergence Sublayer (SSCS) of the Central Controller. The purpose of the HL2 IRM is to provide channel and bandwidth reservation facilities, although it does not provide CHANNEL_AVAILABLE and BANDWIDTH_AVAILABLE registers as its IEEE 1394 counterpart. Since different physical modes are possible between a listener node and a talker node on the wireless link, the available bandwidth depends on the talker and on the listener.

One of the issues raised while streaming an isochronous stream over a wireless network is that the amount of time slots to be reserved in the wireless frame depends on the location of the source and the destination. Different sources and destinations may not use the same modulation scheme, and therefore may not have the same requirements in terms of time slots in the frame. The selection of a modulation scheme (physical mode) depends on the link budget between the source and the destination. This has been the rationale when defining the 1394 SSCS to modify the IEC-6 1883 CMP protocol as described in document E and to adapt it to the constraints of a wireless environment.

According to the present embodiment, the HL2 IRM interface as described in the Annex A.4 of document C is made accessible to the HL2 aware applications.

It may happen that the link budget decreases for a given stream over the time so that a stream may be broken after a certain period of time. According to the present embodiment, an event mechanism is defined so that an application may be informed when a stream is broken over the HL2 network.

A wired HL2 aware application is defined as an application running on a wired device, but aware of the existence of the transparent bridge using a HiperLAN/2 network. The processes defined in the present description for this HL2 aware application are optional. If they are not implemented, they do not prevent streaming to be established over the wireless network. But if they are implemented, they allow an application to know whether the resource reservation was successful or not. It also allows it to be informed of whether a connection is broken.

The nodes will be designated as follows:
- The 'talker' is the wired or wireless node that sources isochronous data.
- The 'listener' is the wired or wireless node that sinks isochronous data.
- The HL2 parent of the HL2 aware application is the HL2 node connecting this HL2 aware application to the HL2 network.
- The HL2 parent of the talker is the HL2 node connecting the talker to the HL2 network.
- The HL2 parent of the listener is the HL2 node connecting the listener to the HL2 network.

A node is identified as a HL2 node if it contains a unit directory at a predetermined offset in its configuration ROM as specified by document D. This unit directory contains parameters called 'specifier_ID' and 'version', which enable any IEEE 1394 node to verify whether the node under consideration is a HL2 node or not. Respective values of 0180c2₁₆ and 000200₁₆ characterize a HL2 node.

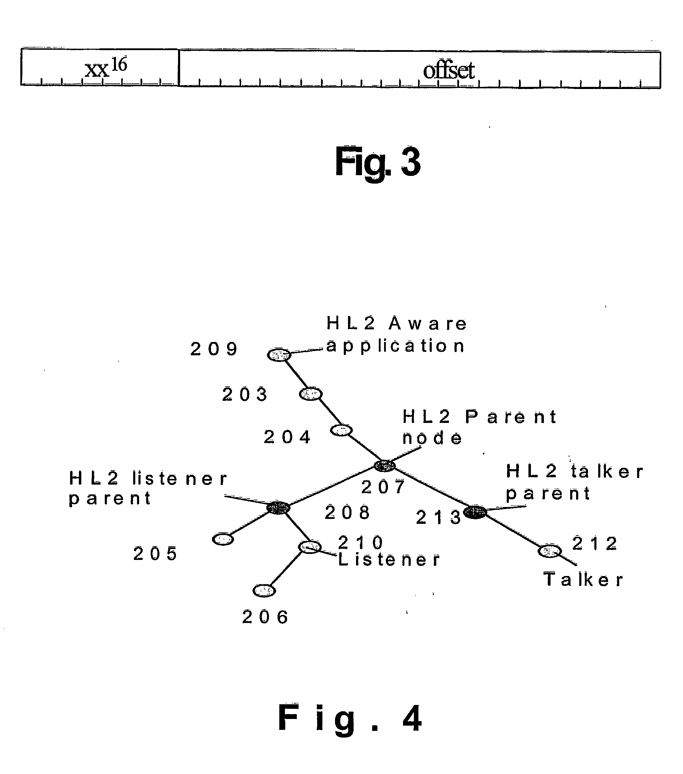

The HL2 unit directory also contains an entry describing the address offset to be used to send lock commands. This address offset is in the unit space starting at 0xFFFF F000 0800 as described in IEEE 1212 Section 4.2. The format of this entry is as indicated in figure 3.

- Figure 4 is a diagram of the network of figure 2, where some of the designations above are shown for the case in which node 209 has a HL2 aware application, node 210 is a listener node and node 212 is a talker node. For the purpose of the example, the HL2 IRM is managed by HL2 node 213.

A description of the HL2 IRM interface will now be given.

According to the present embodiment, a HL2 aware application examines the configuration ROM of the nodes of its local bus. It will thus detect which nodes contain a HL2 unit directory, and thus which nodes are HL2 nodes.

The 1394 SSCS layer of the Central Controller contains an HL2 IRM, the interface of which is described in the 1394 SSCS Technical Specification (document C).

A wireless 1394 application usually sends lock commands to make resource reservations on a serial bus.

When a HL2 aware application (running on a wired device, e.g. node 209) detects the presence of HL2 nodes on its local bus, it uses, according to the present embodiment, the same commands to open and close isochronous streams as specified by the 1394 SSCS document. Since a wired application does not necessarily know on which node the HL2 IRM runs, it is proposed that the wired application sends these commands to its parent HL2 node (after consulting an appropriate internal topology map) - in the case of the example of figure 4, node 207. It sends these commands to the address offset specified in the HL2 unit directory entry.

According to a variant embodiment, this address may also be fixed and not is necessarily coded in the HL2 unit directory entry.

The parent wireless node 209 knows on which HL2 node (207) the HL2 IRM runs. When it receives a lock command, it relays this command to the HL2 IRM behaving as a proxy. When the HL2 IRM sends back the lock response to the parent wireless node 207, it relays this response back to the application.

The parent wireless node of the HL2 aware application that has relayed a successful lock command (i.e. the HL2 aware application action has been successfully completed by the HL2 IRM) configures the HL2 iPCR and oPCR plug control registers of the HL2 parent nodes of the listener and the talker respectively with the corresponding payload value so that the HL2 isochronous reservation protocol can be completed, without any further action by the HL2 aware application.

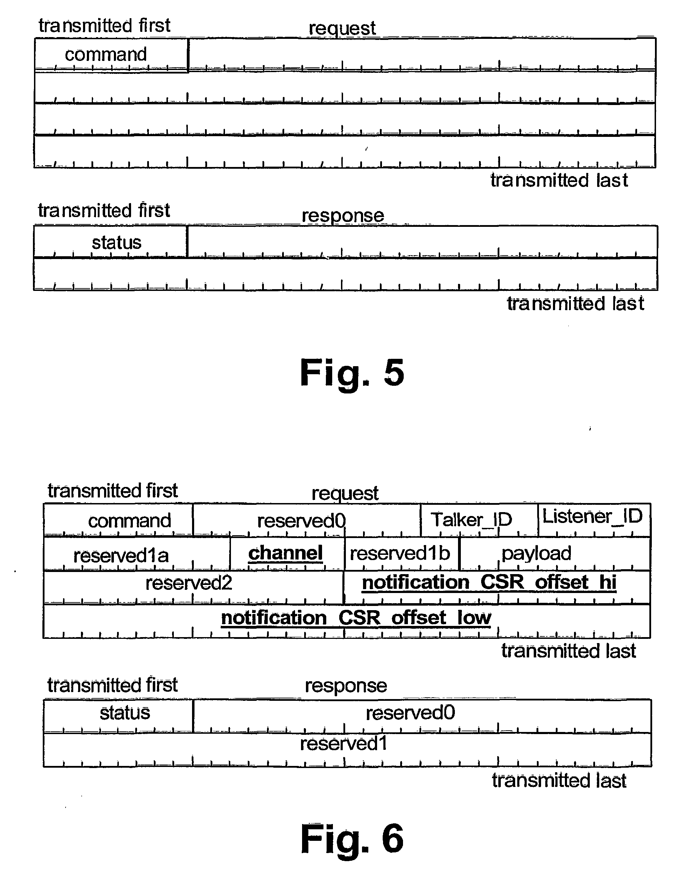

The new commands will now be described:
The new commands are based on the HL2 request/response system. The required commands allow to allocate a channel, to allocated a certain quantity bandwidth, to release channel and bandwidth, and to reallocate after bus reset. The generic message format is shown in figure 5.

The parameters are as follows:
'command': the command of the request as detailed in Table 1

**Table 1**

| Value | Name | Description |
|---|---|---|
| 0 | - | reserved |
| 1 | ALLOCATE_SOME | Ask for channel and bandwidth |
| 2 | MODIFY_BANDWIDTH | Ask for bandwidth modification on a specified channel |
| 3 | RECLAIM_THIS | Ask for channel and bandwidth after bus reset |
| 4 | RELEASE_THIS | Release channel (and its associated bandwidth) |
| 5-255 | | reserved |

'status' : the status of the response as detailed in Table 2

**Table 2**

| Value | Name | Description |
|---|---|---|
| 0 | SUCCESS | Request has been successfully performed |
| 1 | CHANNEL | Failure on channel allocation |
| 2 | RESET | Bus Reset in progress |
| 3 | BANDWIDTH | Failure on bandwidth allocation |
| 4 | BOTH | Failures on channel and bandwidth |
| 5-254 | | reserved |
| 255 | BAD_COMMAND | This command is unsupported |

The commands will be described in two steps :
- What the HL2 aware application needs to know about these commands
- What the HL2 nodes need to know about these commands

### 1. ALLOCATE_SOME command

Figure 6 gives the format of this command according to the present embodiment.

### 1.1 Parameters

Fields used differently compared to the HL2 1394 SSCS specification are underlined, both in the text and in figure 6:
command : in this case it is 0x00.
talker_ID : PhyID of the talker node (source of the stream).
listener_ID : PhyID of the listener node (sink of the stream).
**channel** : 1394 channel as already allocated at the 1394 IRM.
payload : data payload for the stream (as described in IEC-61883). It can be taken at the oPCR or given by the application.
**notification CSR offset high** : first 16 bits for the CSR offset used for notification from the HL2 parent node to the 1394 application.
**notification CSR offset low** : last 32 bits for the CSR offset used for notification from the HL2 parent node to the 1394 application.
status : response status as described below.

The HL2 aware application uses the node ID of the real talker and listener (even if these are wired nodes) in the talker_ID and listener_ID field of the ALLOCATE_SOME lock command. This command is sent to the parent HL2 node of the application.

### 1.2 HL2 nodes behavior

The parent wireless node knows on which HL2 node the IRM runs. It also knows the topology map of the wireless network. When it receives an ALLOCATE_SOME lock command, it removes the channel field (to generate a HL2 SSCS lock command) and converts the real talker_ID and listener_ID into the node_ID of their respective wireless parent nodes. It also converts the 1394 payload field into the HL2 payload field (The payload values are expressed differently on the IEEE1394 bus and on Hiperlan2). It then relays this command to the HL2 IRM behaving as a proxy.

When it receives the IRM lock response, the parent wireless node replaces the wireless channel allocated by the HL2 IRM with the wired 1394 channel. It also replaces the talker_ID, listener_ID and payload fields with their initial wired 1394 values, and then relays this response back to the application.

The parent wireless node stores the channel values to carry out a mapping between the Hiperlan2 channel and the IEEE1394 channel. It also stores the notification_CSR_offset fields that will be further used to notify the HL2 aware application when the allocated bandwidth over the link cannot be guaranteed anymore. See the section on Event notification below for more details.

The parent wireless node then generates "inter transparent bridge management" commands (e.g. lock based commands, or write requests to some specific registers) to communicate the HL2 talker node and HL2 listener node the mapping of the HL2 wireless channel to the 1394 wired channel.

Eventually, as described above, the parent HL2 wireless node configures the iPCR and oPCR of the HL2 parent nodes of the talker and listener respectively, as described in the 1394 SSCS (document C).

### 2. MODIFY_BANDWIDTH command

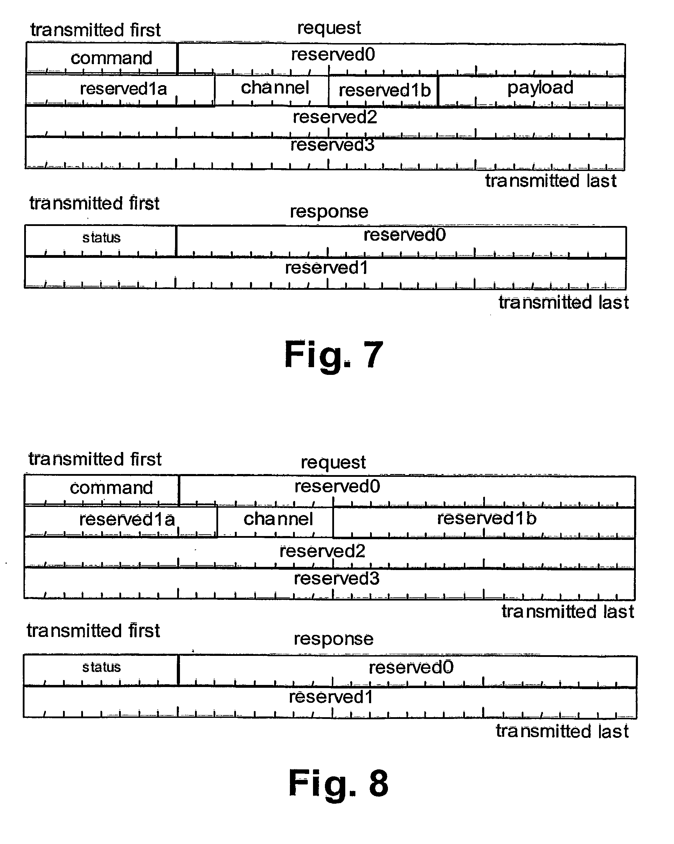

Figure 7 gives the format of this command according to the present embodiment.

### 2.1 Parameters

command : in this case it is 0x01.
channel : 1394 channel as already allocated at the (wired) 1394 IRM.
payload : data payload for the stream (as described in IEC-61883). It can be taken read from the oPCR or given by the application.

This call is used to modify the bandwidth on an already allocated channel. The payload value replaces the former one. When called with a null value for the payload, the channel is not released. This command is sent by the application to the parent HL2 node of the application.

### 2.2 HL2 nodes behavior

The HL2 parent node intercepts this command. It translates the channel and payload fields into the corresponding HL2 channel and payload fields and relays this command to the HL2 IRM. The HL2 parent node receives the lock response from the IRM and modifies the HL2 channel and payload fields before sending the response back to the HL2 aware application.

### 3. RECLAIM_THIS command

Figure 7 gives the format of this command according to the present embodiment.

### 3.1 Parameters

command : in this case it is 0x02.
channel : 1394 channel as already reallocated at the 1394 IRM.
payload : data payload for the stream, as already described above.

This call is used to reallocate the channel and bandwidth after a Bus Reset. This command is sent to the parent HL2 node of the application.

### 3.2 HL2 node behavior

If bus resets are propagated over the HL2 bus as HL2 bus resets, the HL2 parent node intercepts this command. It translates the channel and payload fields into the corresponding HL2 channel and payload fields and relays this command to the HL2 IRM, The HL2 parent node receiving the lock response from the IRM, translates back the HL2 channel and payload fields and sends it back to the HL2 aware application.

### 4. RELEASE_THIS command

Figure 8 gives the format of this command according to the present embodiment.

### 4.1 Parameters

command : in this case it is 0x03.
channel: channel to be released (as released in the 1394 IRM).

This call is used to release the channel and its associated bandwidth. This command is sent to the parent HL2 node of the application.

### 4.2 HL2 node behavior

The HL2 parent node intercepts this command. It translates the channel field into the corresponding HL2 channel field and relays this command to the HL2 IRM. The HL2 parent node receiving the lock response from the IRM, translates back the HL2 channel field and sends it back to the HL2 aware application.

Event notification will now be described.

As mentioned in the introduction, the specificity of a wireless network like Hiperlan2 is that the bandwidth capability depends on the link budget, which is a dynamic parameter. A notification mechanism is defined hereafter to notify the application of any problem at this level.

With the ALLOCATE_SOME request, the application provides the HL2 parent node with an address offset for this notification. This offset identifies a specific register in the CSR space of the application's 1394 node. With this mechanism, every application can have a specific register for this purpose.

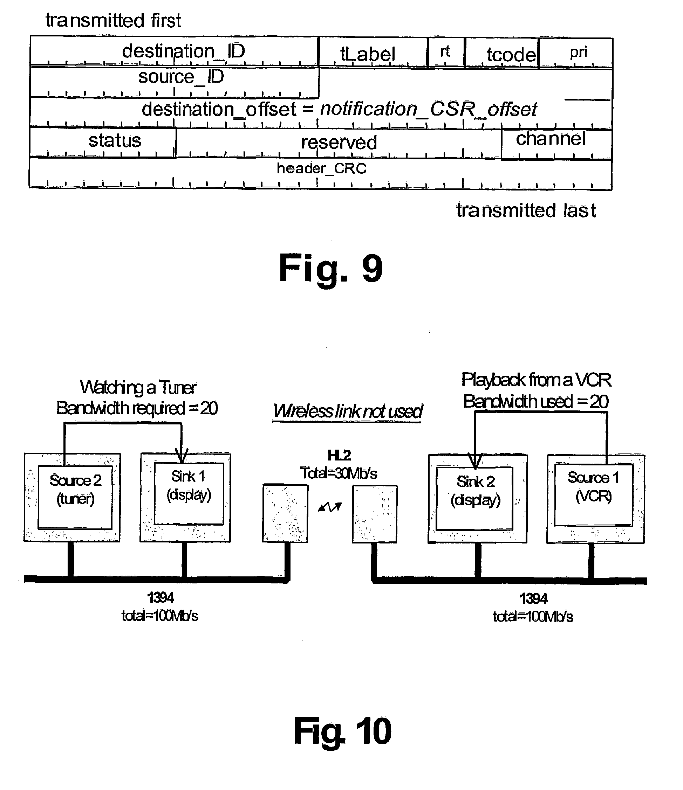

When a problem occurs on the HL2 bus, the HL2 parent node is informed via the HL2 bus event mechanism (using the HL2_CSR dedicated to event notification defined in the 1394 SSCS Annex A). To inform the application of a bandwidth problem, the HL2 parent node performs a 1394 Quadlet Write Request on this register, according to the format given by figure 9.

The 'status' parameter indicates the reason of the bandwidth problem, as indicated by Table 3.

**Table 3**

| Value | Name | Description |
|---|---|---|
| 0 | | reserved |
| 1 | CHANNEL | Failure on channel (may be caused by a preemption) |
| 2 | RESET | Bus Reset crashed the connection |
| 3 | BANDWIDTH | Failure on bandwidth (caused by preemption or by link budget change) |
| 4 | BOTH | Failures on channel and bandwidth |
| 5 - 255 | | reserved |

The 'channel' parameter indicates the 1394 channel which is affected by the problem. This parameter allows the application to identify the stream concerned by the problem.

The connection processes will now be described.

Several methods that a HL2 aware application follows according to the present embodiment are presented. They concern the creation of a connection, the destruction of a connection, the re-establishment of a connection after a bus reset, and the overlaying of a connection.

### 1. Creation

In order to set up a connection, an application performs at least some of the following steps:
a. Parse other bus devices' configuration ROMs to detect the presence of HL2 nodes on the local bus.
b. Ask for the topology map of the wireless link, and check which HL2 nodes are on the path between the source and the sink.
c. Perform a Read request on the oPCR of the source to determine the required bandwidth. This information may also be provided directly by a client.
d. Perform a Read request on the iPCR of the sink to verify that it is free.
e. Perform a Read request on:
   1. the IRM BANDWIDTH_AVAILABLE register
   2. the IRM CHANNELS_AVAILABLE register
f. Perform Lock requests on:
   1. the IRM BANDWIDTH_AVAILABLE register
   2. the IRM CHANNELS_AVAILABLE register
   (as such, steps c to f conform to IEC 6 1883)
g. Perform an ALLOCATE_SOME lock request on its parent HL2 node.
h. If the ALLOCATE_SOME was successful, perform Lock requests on :
   1. the oPCR of the source
   2. the iPCR of the sink
   (as described in IEC 61883)
i. Otherwise, release resources on the wired bus (as described in IEC 61883) and report a failure.

The order of actions is indicative, other combinations are also possible.

### 2. Destruction

To close a connection, an application carries out at least some of the following steps:
- Perform Read requests on:
   the oPCR of the source to verify that it is not overlaid
   the IRM BANDWIDTH_AVAILABLE register
- Perform Lock requests on
   the IRM BANDWIDTH_AVAILABLE register
   the IRM CHANNELS_AVAILABLE register
   the oPCR of the source
   the iPCR of the sink
- Send a RELEASE_THIS lock command to its HL2 parent node for each HL2 link crossed by the stream

Note that step 3 could also be done just after step 1.

### 3. Re-establishment after bus reset

The bus reset is propagated over the HL2 network, so the application which built the connection is aware that a bus reset occurred, even if it is at the other side of the HL2 network, The re-establishment basically follows the same rules as the creation of a connection, except that the ALLOCATE_SOME lock command is replaced by a RECLAIM_THIS lock command.

### 4. Overlay

To overlay a connection, an application has to ask for the topology map of the wireless network, check if the wireless network is on the path between the source and the sink, and deduce whether bandwidth has to be reserved on the HL2 link. If the wireless network was not on the path before, an ALLOCATE_SOME command has to be generated, and the process is then that of a connection. Writing in the iPCR of the new listener of the connection is also performed.

If the available link budget is not sufficient for that new listener, the application can rely on a notification message as described in the section on event notification.

Relation with resource reservation initiated by the transparent bridge:
The transparent bridge intercepts PCRs lock responses to trigger resource reservations over the HL2 bus. These resource reservations may sometimes collide with resource reservations triggered by HL2 aware applications. The issue is solved as follows:
   HL2 aware applications are required to first reserve HL2 resources (send the ALLOCATE_SOME command), and only afterwards send a lock request and responses to node PCRs.

After a successful HL2 resource reservation (the parent node received a positive ALLOCATE_SOME response from the IRM), the HL2 parent node is required to send inter-bridge management commands (either lock based commands or quadlet write based commands) to other HL2 nodes, in order to inform them of the existence of the HL2 channel and the current mapping with a 1394 channel.

According to the present variant, the HL2 parent node sends inter-bridge management commands before relaying the ALLOCATE_SOME response to the HL2 aware application. Every HL2 node will then be informed of the establishment of this HL2 channel before intercepting PCR lock responses. Thus these HL2 nodes will not try to make the same reservation again when receiving the PCR lock responses.

The following variants can be applied to the above embodiment:
(a) The 1394 application transmits to the HL2 parent node the physical identifiers ('PhyIDs') of the HL2 parent talker and listener nodes, within the ALLOCATE_SOME message. This simplifies the task of the HL2 parent node, which does not need to determine this information by itself.
(b) The 1394 application sends the lock commands (ALLOCATE_SOME etc...) to a specific, predetermined HL2 node (e.g. the Central Controller) and not to its link parent. The predetermined HL2 node then determines the HL2 parent node of the 1394 application.
(c) A new request (called e.g. 'SUBSCRIBE') is defined to allow an application to subscribe to events independently from a resource reservation. In other words, the application will receive events relating to channels it specifies in the request. A request 'UNSUBSCRIBE' is also defined.
(d) Possibility to remove the RECLAIM_THIS request, because a 1394 bus reset does not cause a HL2 bus reset, and vice-versa.

The invention allows an application to know whether it is possible or not to establish the required stream.

It allows cleaner management of the link resources.

It is compliant with 1394-1995 and the 1394a-2000 optimization algorithms for connection management.

It works with networks interconnecting two or more 1394 clusters.

It allows an application to warn the user in case of impossibility of stream establishment. This may lead to smart algorithms suggesting to the user that with a different topology map the network would work better, by putting on the same side of the wireless link source and sink that are usually used together. Referring to the example of figure 1, the application would suggest to invert Source 1 and Source 2, which would lead to the topology of figure 10.

## Claims

1. Method for managing a connection in a communication network comprising a bridge interfacing at least two device clusters, wherein the connection is established between a first device (209, 203, 204) and a second device (205, 206, 210) respectively connected to different clusters, **characterized in that** it comprises the steps, at the level of an application adapted to establish said connection:
- requesting reserving resources for the connection over the bridge;
- registering with a portal (207, 208) of said bridge for receiving notification of at least one event type related to the status of the resources allocated to the connection,
and **in that** the request for reserving resources comprises an address of the application, for sending notifications

2. Method according to claim 1, wherein the portal (207, 208) is a node of the cluster to which the device establishing the connection is connected, or a central controller of the bridge.

3. Method according to one of the claims 1 or 2, wherein the address comprises an offset in the address space of the node (209, 203, 204, 205, 206, 210) hosting the application.

4. Method according to one of the claims 1 to 3, wherein the bridge is a wireless bridge comprising an isochronous resource manager, further comprising the step of, further to receiving the resource reservation request, having the portal forward the request to the isochronous resource manager, await its response and transmit the response back to the application.

5. Method according to claim 4, further comprising the step, at the level of the portal (207, 208, 213), if the reservation is successfully made with the isochronous resource manager, of transmitting parameters of the reservation to all portals involved in the connection.

6. Method according to claim 5, wherein the step of transmitting parameters to the portals (207, 208, 213) is carried out before the step of forwarding the response of the isochronous resource manager to the application.

7. Method according to one of the claims 4 to 6, wherein a reservation request by the application has a format similar to a reservation request addressable to the isochronous resource manager of the bridge, said reservation request by the application comprising identifiers of the source and sink nodes (203 to 206, 209, 210, 212) for the connection, said portal (207, 208, 213) further carrying out the step of replacing the source and sink node identifiers of the reservation request of the application by the identifiers of portals connecting the source and sink nodes to the bridge, and of carrying out the reverse change in the response of the isochronous resource manager.

8. Method according to one of the claims 1 to 6, further comprising the step, at the level of the application, of receiving from the bridge topological information for determining which portals (207, 208, 213) of the bridge are involved in a connection.

9. Method according to claim 8, wherein a reservation request by the application further comprises identifiers of the portals (207, 208, 213) connecting the source and sink nodes of the connection to the bridge.

10. Device for connection to a cluster in a communication network comprising a plurality of clusters connected by a bridge, **characterized in that** it comprises an application for requesting resource reservation for a connection over the bridge and for registering with a portal (207, 208, 213) of the bridge for receiving notifications of events relating to the status of the resources allocated to the connection, the request for reserving resources comprising an address of the application, for sending notifications.

## Patentansprüche

1. Verfahren zum Managen einer Verbindung in einem Kommunikationsnetz, das eine Brücke umfasst, die mindestens zwei Vorrichtungscluster verbindet, wobei die Verbindung zwischen einer ersten Vorrichtung (209, 203, 204) und einer zweiten Vorrichtung (205, 206, 210) aufgebaut wird, die jeweils mit unterschiedlichen Clustern verbunden sind, **dadurch gekennzeichnet, dass** das Verfahren auf der Ebene einer für das Aufbauen der Verbindung ausgelegten Anwendung die folgenden Schritte umfasst:
- Anfordern des Reservierens von Betriebsmitteln für die Verbindung über die Brücke;
- Registrieren bei einem Portal (207, 208) der Brücke zum Empfangen einer Benachrichtigung mindestens eines Ereignistyps in Bezug auf den Status der der Verbindung zugewiesenen Betriebsmittel,
und dass die Anforderung zum Reservieren von Betriebsmitteln eine Adresse der Anwendung zum Senden von Benachrichtigungen umfasst.

2. Verfahren nach Anspruch 1, wobei das Portal (207, 208) ein Knoten des Clusters, mit dem die Vorrichtung, die die Verbindung aufbaut, verbunden ist, oder ein zentraler Controller der Brücke ist.

3. Verfahren nach einem der Ansprüche 1 oder 2, wobei die Adresse einen Versatz in dem Adressraum des Knotens (209, 203, 204, 205, 206, 210), der die Anwendung hostet, umfasst.

4. Verfahren nach einem der Ansprüche 1 bis 3, wobei die Brücke eine drahtlose Brücke ist, die einen isochronen Betriebsmittelmanager umfasst, wobei das Verfahren ferner den Schritt des Empfangens der Betriebsmittelreservierungsanforderung, des Veranlassens, dass die Anforderung durch das Portal an den isochronen Betriebsmittelmanager weitergeleitet wird, des Wartens auf seine Antwort und des Zurücksendens der Antwort an die Anwendung umfasst.

5. Verfahren nach Anspruch 4, das ferner auf der Ebene des Portals (207, 208, 213) den folgenden Schritt des Sendens von Parametern der Reservierung an alle an der Verbindung beteiligten Portale umfasst, falls die Reservierung bei dem isochronen Betriebsmittelmanager erfolgreich vorgenommen wird.

6. Verfahren nach Anspruch 5, wobei der Schritt des Sendens von Parametern an die Portale (207, 208, 213) vor dem Schritt des Weiterleitens der Antwort des isochronen Betriebsmittelmanagers an die Anwendung ausgeführt wird.

7. Verfahren nach einem der Ansprüche 4 bis 6, wobei eine Reservierungsanforderung durch die Anwendung ein ähnliches Format wie eine an den isochronen Betriebsmittelmanager der Brücke adressierbare Reservierungsanforderung aufweist, wobei die Reservierungsanforderung durch die Anwendung Kennungen der Quell- und Senkenknoten (203 bis 206, 209, 210, 212) für die Verbindung umfasst, wobei das Portal (207, 208, 213) ferner den Schritt des Ersetzens der Quell- und Senkenknotenkennungen der Reservierungsanforderung der Anwendung durch die Kennungen der Portale, die die Quell- und Senkenknoten mit der Brücke verbinden, ausführt und die Rückänderung in der Antwort des isochronen Betriebsmittelmanagers ausführt.

8. Verfahren nach einem der Ansprüche 1 bis 6, das ferner auf der Ebene der Anwendung den Schritt des Empfangens topologischer Informationen zum Bestimmen, welche Portale (207, 208, 213) der Brücke an einer Verbindung beteiligt sind, von der Brücke umfasst.

9. Verfahren nach Anspruch 8, wobei eine Reservierungsanforderung durch die Anwendung ferner Kennungen der Portale (207, 208, 213), die die Quell- und Senkenknoten der Verbindung mit der Brücke verbinden, umfasst.

10. Vorrichtung zur Verbindung mit einem Cluster in einem Kommunikationsnetz, das mehrere Cluster umfasst, die durch eine Brücke verbunden sind, **dadurch gekennzeichnet, dass** die Vorrichtung eine Anwendung zum Anfordern einer Betriebsmittelreservierung für eine Verbindung über die Brücke und zum Registrieren bei einem Portal (207, 208, 213) der Brücke zum Empfangen von Benachrichtigungen über Ereignisse, die sich auf den Status der der Verbindung zugewiesenen Betriebsmittel beziehen, umfasst, wobei die Anforderung zum Reservieren von Betriebsmitteln eine Adresse der Anwendung zum Senden von Benachrichtigungen umfasst.

## Revendications

1. Procédé permettant de gérer une connexion dans un réseau de communication comprenant un pont qui fait l'interface entre au moins deux groupes de dispositifs, dans lequel la connexion est établie entre un premier dispositif (209, 203, 204) et un second dispositif (205, 206, 210) qui sont respectivement connectés à différents groupes, **caractérisé en ce qu'**il comprend les étapes, au niveau d'une application conçue pour établir ladite connexion, consistant à :
- demander une réservation de ressources pour la connexion sur le pont ;
- s'inscrire à un portail (207, 208) dudit pont afin de recevoir une notification d'au moins un typé d'événement associé au statut des ressources attribuées à la connexion,
et **en ce que** la demande de réservation de ressources comprend une adresse de l'application, pour l'envoi des notifications

2. Procédé selon la revendication 1, dans lequel le portail (207, 208) est un noeud du groupe auquel le dispositif établissant la connexion est connecté, ou un contrôleur central du pont.

3. Procédé selon l'une des revendications 1 ou 2, dans lequel l'adresse comprend un décalage dans l'espace d'adresse du noeud (209, 203, 204, 205, 206, 210) qui héberge l'application.

4. Procédé selon l'une des revendications 1 à 3, dans lequel le pont est un pont sans fil comprenant un gestionnaire de ressources isochrones, comprenant en outre l'étape consistant en ce que, suite à la réception de la demande de réservation de ressources, le portail transmette la demande au gestionnaire de ressources isochrones, attende sa réponse et retransmette la réponse à l'application.

5. Procédé selon la revendication 4, comprenant en outre l'étape, au niveau du portail (207, 208, 213), si la réservation est réalisée avec succès par le biais du gestionnaire de ressources isochrones, consistant à transmettre des paramètres de la réservation à tous les portails impliqués dans la connexion.

6. Procédé selon la revendication 5, dans lequel l'étape de transmission des paramètres aux portails (207, 208, 213) est réalisée avant l'étape de transmission de la réponse du gestionnaire de ressources isochrones à l'application.

7. Procédé selon l'une des revendications 4 à 6, dans lequel une demande de réservation par l'application possède un format similaire à une demande de réservation adressable au gestionnaire de ressources isochrones du pont, ladite demande de réservation par l'application comprenant des identifiants de la source et des noeuds puits (203 à 206, 209, 210, 212) pour la connexion, ledit portail (207, 208, 213) réalisant en outre l'étape consistant à remplacer les identifiants de la source et des noeuds puits de la demande de réservation de l'application par les identifiants des portails connectant la source et les noeuds puits au pont, et à réaliser la modification inverse dans la réponse du gestionnaire de ressources isochrones.

8. Procédé selon l'une des revendications 1 à 6, comprenant en outre l'étape, au niveau de l'application, consistant à recevoir des informations topologiques du pont afin de déterminer les portails (207, 208, 213) du pont impliqués dans une connexion.

9. Procédé selon la revendication 8, dans lequel une demande de réservation par l'application comprend en outre les identifiants des portails (207, 208, 213) connectant la source et les noeuds puits de la connexion au pont.

10. Dispositif pour une connexion à un groupe dans un réseau de communication comprenant une pluralité de groupes connectés par un pont, **caractérisé en ce qu'**il comprend une application permettant de demander une réservation de ressources pour une connexion sur le pont et de s'inscrire à un portail (207, 208, 213) du pont pour recevoir des notifications des événements associés au statut des ressources attribuées à la connexion, la demande de réservation de ressources comprenant une adresse de l'application, pour l'envoi de notifications.
